# EUROPÄISCHE PATENTANMELDUNG

(11) **EP 3 118 505 A1**
(43) Veröffentlichungstag der Anmeldung: **18.01.2017**
(21) Anmeldenummer: 16174102.0
(22) Anmeldetag: 13.06.2016
(51) Int. Cl.: F16L 33/01, F16L 33/22, F16L 37/091

(54) **LEITUNGSKUPPLUNGSSYSTEM FÜR HOCHDRUCKLEITUNGEN**

(30) Priorität: 16.07.2015 DE 202015103725 U
(71) Anmelder: REHAU AG + Co, 95111 Rehau (DE)
(72) Erfinder: Schörner, Georg, 95111 Rehau (DE); Yücel, Erdal, 95028 Hof (DE)

(57) **Zusammenfassung**

Die Erfindung betrifft ein Leitungskupplungssystem mit mindestens einem Anschlusselement (2), einer an das Anschlusselement (2) druckdicht anschließbaren Medienleitung (3) und mindestens einer Rastvorrichtung (4), die beim druckdichten Anschluss der Medienleitung (3) in das Anschlusselement (2) einrastet, wobei die Rastvorrichtung (4) zumindest im eingerasteten Zustand die Medienleitung (3) umgibt und ein Rastelement (5) aufweist, welches beim Einrasten in das Anschlusselement (2) mit einer die Medienleitung (3) axial arretierenden Arretiervorrichtung (6) des Anschlusselementes (2) zusammenwirkt und wobei zur Herstellung der Druckdichtigkeit zwischen dem Anschlusselement (2) und dem Ende der Medienleitung (3) ein Dichtungselement (7) vorgesehen ist. Erfindungsgemäß besteht die Medienleitung (3) aus einem flexiblen, mehrschichtigen Schlauch. Der Schlauch (3) weist eine Innenschicht (8) und eine die Innenschicht (8) umgebende Armierungsschicht (9) auf. Vom Schlauch (3) ist endseitig die Armierungsschicht (9) entfernt, so dass die Stirnseite (11) des Schlauchleitungsendes nur aus der Innenschicht (8) besteht und das Dichtungselement (7) im eingerasteten Zustand des Rastelementes (5) direkt an der Außenseite der Innenschicht (8) anliegt.

## Beschreibung

Die Erfindung betrifft ein Leitungskupplungssystem für Hochdruckanwendungen, mit
- mindestens einem Anschlusselement,
- einer an das Anschlusselement druckdicht anschließbaren Medienleitung und
- mindestens einer Rastvorrichtung, bei beim druckdichten Anschluss der Medienleitung in das Anschlusselement einrastet,
- wobei die Rastvorrichtung zumindest im eingerasteten Zustand die Medienleitung umgibt und ein Rastelement aufweist, welches beim Einrasten in das Anschlusselement mit einer die Medienleitung axial arretierenden Arretiervorrichtung des Anschlusselementes zusammenwirkt und
- wobei zur Herstellung der Druckdichtigkeit zwischen dem Anschlusselement und dem Ende der Medienleitung ein Dichtungselement vorgesehen ist.

Leitungskupplungssysteme mit den eingangs beschriebenen Merkmalen sind für starre Rohre als Medienleitungen bekannt. Derartige Leitungskupplungssysteme zeichnen sich durch eine schnelle und vergleichsweise einfache Arretierung der Rohre aus. Um die erforderlich Druckdichtigkeit sicherzustellen, ist ein homogener, einschichtiger Aufbau der Medienleitung erforderlich, da diese stirnseitig mit dem hohen Systemdruck beaufschlagt wird und entsprechend auch diesbezüglich die Druckdichtigkeit gewährleistet sein muss. Mehrschichtige Medienleitungen sind stirnseitig aufgrund der Fuge(n) zwischen den einzelnen Schichten anfällig gegen ein Eindringen von Medium in diese Fuge(n). Dies kann eine Undichtigkeit bzw. sogar ein lokales Versagen der Medienleitung zur Folge haben.

Zum Anschluss von flexiblen, mehrschichten Schläuchen, insbesondere für Kfz-Flüssiggas-Anlagen, ist es im Stand der Technik hingegen erforderlich, ein Leitungskupplungssystem einzusetzen, welches beispielsweise neben der flexiblen Medienleitung zwei Überwurfmuttern, zwei Schneidringe sowie zwei Nippel aufweist. Für die Montage der Schlauchleitung am Tank und Einlauf werden ferner zusätzlich zwei Schraubmuttern und zwei Konusringe benötigt. Eine andere vorbekannte Lösung besteht aus flexiblem Schlauch, zwei Klemmringen sowie zwei Nippeln. Auch hier werden für die Montage der Schlauchleitung am Tank und Einlauf zusätzlich zwei Schraubmuttern und zwei Konusringe benötigt. Die beiden vorbekannten Systeme zur Ankupplung von flexiblen Schlauchleitungen bestehen somit aus einer Vielzahl von Einzelteilen, welche zum Teil sehr filigran sind. Entsprechend sind die Herstell- und Montagekosten vergleichsweise hoch und das Montageverfahren ist aufwendig.

Vor diesem Hintergrund besteht die der Erfindung zugrunde liegende Aufgabe darin, ein Leitungskupplungssystem für Hochdruckanwendungen mit den eingangs beschriebenen Merkmalen anzugeben, welches auch für flexible, mehrschichtige Medienleitungen geeignet ist.

Diese Aufgabe wird erfindungsgemäß dadurch gelöst, dass die Medienleitung aus einem flexiblen, mehrschichtigen Schlauch besteht, dass der Schlauch eine Innenschicht, eine die Innenschicht umgebende gewickelte und / oder geflochtene Armierung und optional eine die Armierungsschicht umgebende äußere zusätzliche Schutzschicht aufweist und dass vom Schlauch endseitig die Armierungsschicht sowie optional die zusätzliche Schutzschicht entfernt ist, so dass die Stirnseite des Schlauchleitungsendes nur aus der Innenschicht besteht und das Dichtungselement im eingerasteten Zustand des Rastelementes direkt an der Außenseite der Innenschicht anliegt. Die Erfindung beruht auf der grundsätzlichen Überlegung, im sensiblen stirnseitigen Dichtungsbereich der Medienleitung die problematische Mehrschichtigkeit durch ein lokales, endseitiges Entfernen der zusätzlichen Schichten zu beheben. In diesem Endbereich ist es aus mechanischen Gründen nicht erforderlich, eine Armierung vorzusehen, da die Druckbelastung durch die das Schlauchleitungsende umgebende Arretiervorrichtung aufgenommen werden kann. Entsprechend kann endseitig die Armierung von der Schlauchleitung entfernt werden. Hierdurch liegt in diesem Bereich ein einschichtiger Aufbau der Schlauchleitung vor.

Entsprechend kann es im Rahmen der erfindungsgemäßen Lehre nicht dazu kommen, dass aufgrund des hohen Druckes an der Stirnseite zwischen Innenschicht und Armierung Medium eindringt und die Schlauchleitung beschädigt. Das Dichtungselement liegt unmittelbar an dem einschichtigen Endbereich der Medienleitung an und dichtet diesen radial ab. Stirnseitig ist erfindungsgemäß aufgrund der Homogenität der Innenschicht das vorbeschriebene Problem eines Eindringens von Medium zwischen Innenschicht und Armierungsschicht bzw. zwischen Armierungsschicht und Schutzschicht nicht mehr vorhanden. Mittels der erfindungsgemäßen Lehre ist es folglich möglich, grundsätzlich auch mehrschichtige, flexible Schlauchleitungen in einem Leitungskupplungssystem für Hochdruckanwendungen (z.B. 10 bar Überdruck und höher) einzusetzen, welches bislang starren, in ihrem Aufbau homogen Rohrleitungen vorbehalten war.

Zweckmäßigerweise ist die Arretiervorrichtung als radiale Eindrückvorrichtung ausgebildet, welche aufgrund des axialen Einrastens des Rastelementes gegen die Oberfläche der Medienleitung drückt und hierdurch die Medienleitung axial gegenüber dem Anschlusselement arretiert. Vorzugsweise weist die radiale Eindrückvorrichtung mindestens ein krallenartiges Element auf, das sich bei axialer Belastung durch das Rastelement radial aufstellt und hierdurch eine Radialkraft erzeugt. Aufgrund dieser Radialkraft besteht ein inniger Kraftschluss zwischen dem mindestens einen krallenartigen Element und der Oberfläche der Medienleitung. Zweckmäßigerweise liegt die radiale Eindrückvorrichtung direkt an der Außenseite der endseitig freigelegten Innenschicht der Medienleitung an. Das mindestens eine krallenartige Element kann zusätzlich eine Dichtungsfunktion besitzen.

Gemäß einer bevorzugten Ausführungsform der Erfindung weist das Rastelement einen außen umlaufenden Vorsprung auf, der beim Anschluss in einen Hinterschnitt des Anschlusselementes einrastet. Das Rastelement weist einen, vorzugsweise schräg zur Leitungsachse ausgerichteten, Stirnabschnitt auf, der beim Einrasten axial gegen die Arretiervorrichtung drückt.

Im Rahmen der Erfindung liegt es ferner, dass das Rastelement im eingerasteten Zustand an der Oberfläche des Schlauchleitungsendes, vorzugsweise direkt an der Außenseite der endseitig freigelegten Innenschicht, anliegt. In diesem Zusammenhang kann beispielsweise das Rastelement lediglich über einen Kraftschluss mit dem Medienleitungsende verbunden sein. Bei dieser Ausführungsvariante wird vorzugsweise das blanke Medienleitungsende in das Anschlusselement eingeschoben, in das das Rastelement bereits zuvor eingeschoben worden ist, ohne zu verrasten. Alternativ hierzu ist es jedoch aber auch möglich, dass das Rastelement am Ende der Medienleitung befestigt ist und somit gemeinsam mit dem Medienleitungsende in das Anschlusselement zwecks Arretierung eingeschoben wird.

Das Dichtungselement kann als O-Ring ausgebildet sein. Andere Gestaltungen des Dichtungselementes sind hierdurch jedoch nicht ausgeschlossen. Ferner kann in das Schlauchleitungsende zur Formstabilisierung eine Hülse eingeschoben sein. Insbesondere bei Anwendungen für besonders hohe Drücke kann der Spalt zwischen Schlauchleitungsende und Hülse hierbei mit einem zweiten Dichtungselement, vorzugsweise ebenfalls einem O-Ring, abgedichtet sein. Die Hülse sorgt grundsätzlich dafür, dass im Bereich des Schlauchleitungsendes, bei dem die Innenschicht freigelegt ist und folglich allein das Schlauchleitungsende bildet, eine hohe Formstabilität vorliegt, so dass der entsprechende O-Ring und auch die Arretiervorrichtung einwandfrei funktionieren.

Die Innenschicht besteht zweckmäßigerweise aus Kunststoff, insbesondere einem Polyamid (PA), einem Polyurethan (PUR) oder einem thermoplastischen Elastomer (TPE). Die Armierungsschicht kann Fäden und / oder Filamente aus Polyester, PA (z.B. PA 66) und / oder Aramid aufweisen. Auch eine Kombination von zwei oder mehr der vorgenannten Materialien ist im Rahmen der Erfindung möglich.

Im Folgenden wird die Erfindung anhand einer lediglich ein Ausführungsbeispiel darstellenden Zeichnung ausführlich erläutert. Es zeigen schematisch:
- Fig. 1: einen Querschnitt durch ein erfindungsgemäßes Leitungskupplungssystem (ausschnittsweise);
- Fig. 2a: eine alternative Ausführungsform der Erfindung und
- Fig. 2b: einen vergrößerten Ausschnitt aus der Fig. 2a.

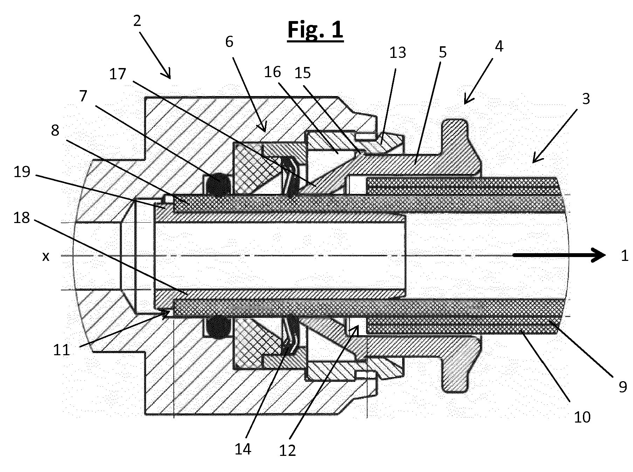

In der Fig. 1 ist ein erfindungsgemäßes Leitungskupplungssystem dargestellt, welches mit hohen Betriebsdrücken des zu transportierenden Mediums 1, z.B. 10 bar Überdruck und mehr, beaufschlagt wird. Dieses System weist ein Anschlusselement 2, eine an das Anschlusselement 2 druckdicht anschließbare Medienleitung 3 zum Transport von Flüssiggas 1 in einem Kraftfahrzeug und eine Rastvorrichtung 4 auf, die beim druckdichten Anschluss der Medienleitung 3 in das Anschlusselement 2 einrastet. Das Anschlusselement 2 kann beispielsweise zum Anschluss der Medienleitung 3 an einen (nicht dargestellten) Tankbehälter dienen. Die Rastvorrichtung 4 umgibt im eingerasteten Zustand die Medienleitung 3. Ferner weist die Rastvorrichtung 4 ein Rastelement 5 auf, welches beim Einrasten in das Anschlusselement 2 mit einer die Medienleitung 3 axial arretierenden Arretiervorrichtung 6 des Anschlusselementes 2 zusammenwirkt. Zur Herstellung der Druckdichtigkeit zwischen dem Anschlusselement 2 und dem Ende der Medienleitung 3 ist ein Dichtungselement 7 vorgesehen. Der Fig. 1 ist zu entnehmen, dass die Medienleitung 3 aus einem flexiblen, mehrschichtigen Schlauch besteht. Der Schlauch 3 weist im Ausführungsbeispiel eine polymere Innenschicht 8 aus Polyamid, eine die Innenschicht 8 umgebende gewickelte und/oder geflochtene Armierungsschicht 9 aus Polyesterfäden sowie eine die Armierungsschicht 9 umgebende äußere polymere Schutzschicht 10 auf. Insbesondere ist der Fig. 1 zu entnehmen, dass vom flexiblen mehrschichtigen Schlauch 3 endseitig die Armierungsschicht 9 sowie die Schutzschicht 10 entfernt sind, so dass die Stirnseite 11 des Schlauchleitungsendes nur aus der Innenschicht 8 besteht. Das Dichtungselement 7 liegt im eingerasteten Zustand der Rastvorrichtung 4 direkt an der Außenseite der Innenschicht 8 an. Stirnseitig ist somit der flexible Schlauch 3 nur in Form der endseitig freigelegten Innenschicht 8 mit dem hohen Prozessdruck des Flüssiggases beaufschlagt. Da die Innenschicht 8 aus einem homogenen Material besteht, kann somit stirnseitig kein Medium 1 in das Material des Schlauchleitungsendes eindringen. Der mehrschichtige Aufbau der flexiblen Schlauchleitung 3 wurde erfindungsgemäß aus dem Dichtungsbereich zwischen Schlauchleitungsende und Anschlusselement 2 heraus verlegt. Folglich liegt der Übergangsbereich 12 vom freigelegten Schlauchleitungsende zur unversehrten, dreischichtigen Schlauchleitung 3 stirnseitig außerhalb der hohen Druckbeaufschlagung.

Die Arretiervorrichtung 6 ist als radiale Eindrückvorrichtung ausgebildet, welche aufgrund des axialen Einrastens des Rastelementes 5 in ein Gegenrastelement 13 des Anschlusselementes 2 gegen die Oberfläche der Medienleitung 3 drückt und hierdurch die Medienleitung 3 axial gegenüber dem Anschlusselement 2 arretiert. Die radiale Eindrückvorrichtung 6 weist hierzu mehrere krallenartige Elemente 14 auf, die sich bei axialer Belastung durch das Rastelement 5 radial aufstellen und hierdurch eine Radialkraft erzeugen, welche die Medienleitung 3 axial im Anschlusselement 2 festlegt. Die krallenartigen Elemente 14 besitzen zusätzlich eine Dichtungsfunktion und ergänzen somit in dieser Hinsicht die Dichtwirkung des Dichtungselementes 7. Wie der Fig. 1 ferner zu entnehmen ist, liegt die radiale Eindrückvorrichtung 6 direkt an der Außenseite der endseitig freigelegten Innenschicht 8 des flexiblen Schlauches 3 an. Das Rastelement 5 weist einen außen umlaufenden Vorsprung 15 auf, der beim Anschluss in einen Hinterschnitt 16 des Gegenrastelementes 13 des Anschlusselementes 2 einrastet. Ferner weist das Rastelement 5 einen schräg zur Leitungsachse x ausgerichteten Stirnabschnitt 17 auf, der beim Einrasten des Rastelementes 5 axial gegen die Arretiervorrichtung 6 drückt. Das Rastelement 5 liegt im eingerasteten Zustand an der Oberfläche des Schlauchleitungsendes, und zwar direkt an der Außenseite der endseitig freigelegten Innenschicht 8 an. Vor der Montage des Schlaucheitungsendes im Anschlusselement 2 sind im Ausführungsbeispiel die Rastvorrichtung 4 und die Medienleitung 3 voneinander getrennt. Die Rastvorrichtung 4 wurde vor der Montage der Medienleitung 3 bereits in das Anschlusselement 2 eingeschoben, ohne jedoch hierbei in das Gegenrastelement 13 einzurasten. Das Einrasten des Rastelementes 5 in das Gegenrastelement 13 erfolgt aufgrund des Kraftschlusses zwischen Schlauchleitungsende und Rastelement 5 im Bereich des Stirnabschnittes 17 automatisch beim Einschieben des Schlauchleitungsendes in das Anschlusseelement 2. Alternativ hierzu kann das Einrasten auch nach dem Einschieben des Schlauchleitungsendes durch ein manuelles axiales Eindrücken des Rastelementes 5 erfolgen. Der Fig. 1 ist zu entnehmen, dass das Dichtungselement 7 als O-Ring ausgebildet ist. Ferner ist zu erkennen, dass in das Schlauchleitungsende zur Formstabilisierung eine Hülse 18 eingeschoben ist. Diese Hülse 18 weist am Einschubende einen umlaufenden Kragen 19 auf, um eine definierte Einschublänge der Hülse 19 in das Schlauchleitungsende zu gewährleisten.

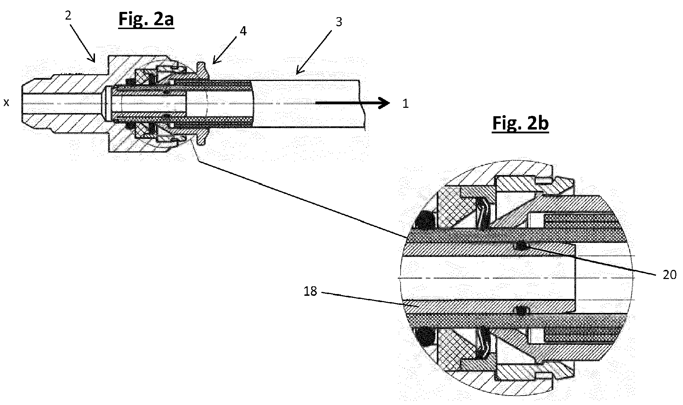

Beim Ausführungsbeispiel gemäß den Fig. 2a, 2b ist der Spalt zwischen Schlauchleitungsende und Hülse 18 mit einem zweiten Dichtungselement 20 in Form eines weiteren O-Ringes abgedichtet. Diese Anwendung ist insbesondere für hohe Drücke geeignet.

## Patentansprüche

1. Leitungskupplungssystem für Hochdruckanwendungen, mit
- mindestens einem Anschlusselement (2),
- einer an das Anschlusselement (2) druckdicht anschließbaren Medienleitung (3) und
- mindestens einer Rastvorrichtung (4), die beim druckdichten Anschluss der Medienleitung (3) in das Anschlusselement (2) einrastet,
- wobei die Rastvorrichtung (4) zumindest im eingerasteten Zustand die Medienleitung (3) umgibt und ein Rastelement (5) aufweist, welches beim Einrasten in das Anschlusselement (2) mit einer die Medienleitung (3) axial arretierenden Arretiervorrichtung (6) des Anschlusselementes (2) zusammenwirkt und
- wobei zur Herstellung der Druckdichtigkeit zwischen dem Anschlusselement (2) und dem Ende der Medienleitung (3) ein Dichtungselement (7) vorgesehen ist,
**dadurch gekennzeichnet, dass** die Medienleitung (3) aus einem flexiblen, mehrschichtigen Schlauch besteht, dass der Schlauch (3) eine Innenschicht (8), eine die Innenschicht (8) umgebende gewickelte und / oder geflochtene Armierungsschicht (9) und optional eine die Armierungsschicht (9) umgebende äußere zusätzliche Schutzschicht (10) aufweist und dass vom Schlauch (3) endseitig die Armierungsschicht (9) sowie optional die zusätzliche Schutzschicht (10) entfernt ist, so dass die Stirnseite (11) des Schlauchleitungsendes nur aus der Innenschicht (8) besteht und das Dichtungselement (7) im eingerasteten Zustand des Rastelementes (5) direkt an der Außenseite der Innenschicht (8) anliegt.

2. Leitungskupplungssystem nach Anspruch 1, **dadurch gekennzeichnet, dass** die Arretiervorrichtung (6) als radiale Eindrückvorrichtung ausgebildet ist, welche aufgrund des axialen Einrastens des Rastelementes (5) gegen die Oberfläche der Medienleitung (3) drückt und hierdurch die Medienleitung (3) axial gegenüber dem Anschlusselement (2) arretiert.

3. Leitungskupplungssystem nach Anspruch 2, **dadurch gekennzeichnet, dass** die radiale Eindrückvorrichtung (6) mindestens ein krallenartiges Element (14) aufweist, das sich bei axialer Belastung durch das Rastelement (5) radial aufstellt und hierdurch eine Radialkraft erzeugt.

4. Leitungskupplungssystem nach Anspruch 2 oder 3, **dadurch gekennzeichnet, dass** die radiale Eindrückvorrichtung (6) direkt an der Außenseite der endseitig freigelegten Innenschicht (8) anliegt.

5. Leitungskupplungssystem nach einem der Ansprüche 1 bis 4, **dadurch gekennzeichnet, dass** das Rastelement (5) einen außen umlaufenden Vorsprung (15) aufweist, der beim Anschluss in einen Hinterschnitt (16) des Anschlusselementes (2) einrastet.

6. Leitungskupplungssystem nach einem der Ansprüche 1 bis 5, **dadurch gekennzeichnet, dass** das Rastelement (5) einen, vorzugsweise schräg zur Leitungsachse (x) ausgerichteten, Stirnabschnitt (17) aufweist, der beim Einrasten axial gegen die Arretiervorrichtung (6) drückt.

7. Leitungskupplungssystem nach einem der Ansprüche 1 bis 6, **dadurch gekennzeichnet, dass** das Rastelement (5) im eingerasteten Zustand an der Oberfläche des Schlauchleitungsendes, vorzugsweise direkt an der Außenseite der endseitig freigelegten Innenschicht (8), anliegt.

8. Leitungskupplungssystem nach einem der Ansprüche 1 bis 7, **dadurch gekennzeichnet, dass** das Dichtungselement (7) als O-Ring ausgebildet ist.

9. Leitungskupplungssystem nach einem der Ansprüche 1 bis 8, **dadurch gekennzeichnet, dass** in das Schlauchleitungsende zur Formstabilisierung eine Hülse (18) eingeschoben ist.

10. Leitungskupplungssystem nach Anspruch 9, **dadurch gekennzeichnet, dass** der Spalt zwischen Schlauchleitungsende und Hülse (18) mit einem zweiten Dichtungselement (20), vorzugsweise einem O-Ring, abgedichtet ist.

11. Leitungskupplungssystem nach einem der Ansprüche 1 bis 10, **dadurch gekennzeichnet, dass** die Innenschicht (8) aus Kunststoff, insbesondere einem PA, PUR oder TPE besteht.

12. Leitungskupplungssystem nach einem der Ansprüche 1 bis 11, **dadurch gekennzeichnet, dass** die Armierungsschicht (9) Fäden und / oder Filamente aus Polyester, PA und/oder Aramid aufweist.
